# EUROPEAN PATENT APPLICATION

(11) **EP 4 629 568 A1**
(43) Date of publication of application: **08.10.2025**
(21) Application number: 23896568.5
(22) Date of filing: 17.11.2023
(51) Int. Cl.: H04L 25/03

(54) **DATA TRANSMISSION METHOD, AND DEVICE AND STORAGE MEDIUM**

(30) Priority: 30.11.2022 CN 202211543589
(71) Applicant: ZTE Corporation, Shenzhen, Guangdong 518057 (CN)
(72) Inventor: HUA, Jian, Shenzhen, Guangdong 518057 (CN); XIN, Yu, Shenzhen, Guangdong 518057 (CN); BAO, Tong, Shenzhen, Guangdong 518057 (CN)
(74) Representative: Aipex B.V.
(86) International application number: PCT/CN2023/132372
(87) International publication number: WO 2024/114416

(57) **Abstract**

Provided are a data transmission method, a device, and a storage medium. The data transmission method includes the following: data to be transmitted is divided into at least two groups of original data sequences, where each group of original data sequences at least includes one piece of data (S110); a two-fold oversampled inverse Fourier transform is sequentially performed on each group of original data sequences to obtain corresponding intermediate data sequences (S120); coefficients are multiplied with either even-numbered groups of the intermediate data sequences or odd-numbered groups of the intermediate data sequences to obtain corresponding target data sequences (S130); an inverse Fourier transform is performed on the target data sequences to form a corresponding group of target time-domain data sequences (S140); and the group of target time-domain data sequences is transmitted on preconfigured time-frequency resources (S150).

## Description

### TECHNICAL FIELD

The present disclosure relates to the field of communication technology, for example, a data transmission method, a device, and a storage medium.

### BACKGROUND

In 5G communication technology, Cyclic Prefix-Orthogonal Frequency Division Multiplexing (CP-OFDM) is adopted as the basic waveform. Furthermore, different numerologies can be used between two adjacent subbands, which disrupts the orthogonality between subcarriers and introduces new interference issues. To address the interference issues, one relatively straightforward method is to insert a guard bandwidth between two transmission bands with different numerologies. However, this method wastes frequency resources.

### SUMMARY

Embodiments of the present disclosure provide a data transmission method, a device, and a storage medium, which reduce data processing latency and enhance the flexibility of data processing.

Embodiments of the present disclosure provide a data transmission method. The method includes the following:
Data to be transmitted is divided into at least two groups of original data sequences, where each group of original data sequences at least includes one piece of data; a two-fold oversampled inverse Fourier transform is sequentially performed on each group of original data sequences to obtain intermediate data sequences; coefficients are multiplied with either even-numbered groups of the intermediate data sequences or odd-numbered groups of the intermediate data sequences to obtain target data sequences; an inverse Fourier transform is performed on the target data sequences to form a group of target time-domain data sequences; and the group of target time-domain data sequences is transmitted on preconfigured time-frequency resources.

Embodiments of the present disclosure provide a data transmission apparatus. The apparatus includes a division module, a first processor, a second processor, a transform module, and a transmission module.

The division module is configured to divide data to be transmitted into at least two groups of original data sequences, where each group of original data sequences at least includes one piece of data. The first processor is configured to sequentially perform a two-fold oversampled inverse Fourier transform on each group of original data sequences to obtain intermediate data sequences. The second processor is configured to multiply coefficients with either even-numbered groups of the intermediate data sequences or odd-numbered groups of the intermediate data sequences to obtain target data sequences. The transform module is configured to perform an inverse Fourier transform on the target data sequences to form a group of target time-domain data sequences. The transmission module is configured to transmit the group of target time-domain data sequences on preconfigured time-frequency resources.

An embodiment of the present disclosure provides a communication device. The communication device includes a memory and one or more processors. The memory is configured to store one or more programs; the one or more programs, when executed by the one or more processors, cause the one or more processors to implement the data transmission method according to any of the embodiments described above.

An embodiment of the present disclosure provides a storage medium. The storage medium stores a computer program that, when executed by a processor, implements the data transmission method according to any of the embodiments described above.

### BRIEF DESCRIPTION OF DRAWINGS

FIG. 1 is a flowchart of a data transmission method according to an embodiment of the present disclosure.
FIG. 2 is a diagram of the generation of a target time-domain data sequence according to an embodiment of the present disclosure.
FIG. 3 is a diagram of a generation of another target time-domain data sequence according to an embodiment of the present disclosure.
FIG. 4 is a diagram of a generation of another target time-domain data sequence according to an embodiment of the present disclosure.
FIG. 5 is a diagram of a generation of another target time-domain data sequence according to an embodiment of the present disclosure.
FIG. 6 is a diagram of a generation of another target time-domain data sequence according to an embodiment of the present disclosure.
FIG. 7 is a diagram of the transmission of data to be transmitted according to an embodiment of the present disclosure.
FIG. 8 is a block diagram illustrating the structure of a data transmission apparatus according to an embodiment of the present disclosure.
FIG. 9 is a diagram illustrating the structure of a communication device according to an embodiment of the present disclosure.

### DETAILED DESCRIPTION

Embodiments of the present disclosure are described below in conjunction with drawings. The present disclosure is described below in conjunction with drawings of the embodiments. The examples given are only used to explain the present disclosure.

Long Term Evolution (LTE) technology is a wireless cellular communication technology of the Fourth Generation (4G). LTE adopts Orthogonal Frequency Division Multiplexing (OFDM) technology, where time-frequency resources composed of subcarriers and OFDM symbols form the wireless physical time-frequency resources of the LTE system. OFDM technology is widely applied in wireless communication. By employing a Cyclic Prefix (CP), the CP-OFDM system effectively addresses multipath delay issues and transforms a frequency-selective channel into a set of parallel flat channels, which simplifies channel estimation methods and provides high channel estimation accuracy. However, the performance of the CP-OFDM system is sensitive to frequency offset and time offset between adjacent subbands due to significant spectral leakage of the system, which can easily lead to inter-subband interference. The LTE system uses guard intervals in the frequency domain, but this method reduces spectral efficiency, necessitating the adoption of new techniques to suppress out-of-band leakage.

The Fifth Generation New Radio (5G NR) communication technology still uses CP-OFDM as the basic waveform, and different numerologies can be adopted between two adjacent subbands, which disrupts the orthogonality between subcarriers and introduces new interference issues. To address the interference issues, one relatively straightforward method is to insert a guard bandwidth between two transmission bands with different numerologies. However, this method wastes frequency resources.

In future 6G communication technology, the frequency bands used by services span a wide range, and deployment methods are highly diverse. Not only are multi-bandwidth channels required, but waveform schemes suitable for different scenarios also need to be supported. Independently executing each waveform scheme increases the cost of base stations/terminals. Therefore, designing a unified waveform architecture to flexibly integrate multiple waveforms and support applications with different channel bandwidths is an urgent problem to be solved.

In view of this, embodiments of the present disclosure provide a data transmission method that divides data to be transmitted into multiple groups and processes the groups separately, thereby reducing processing latency and increasing the flexibility of data processing.

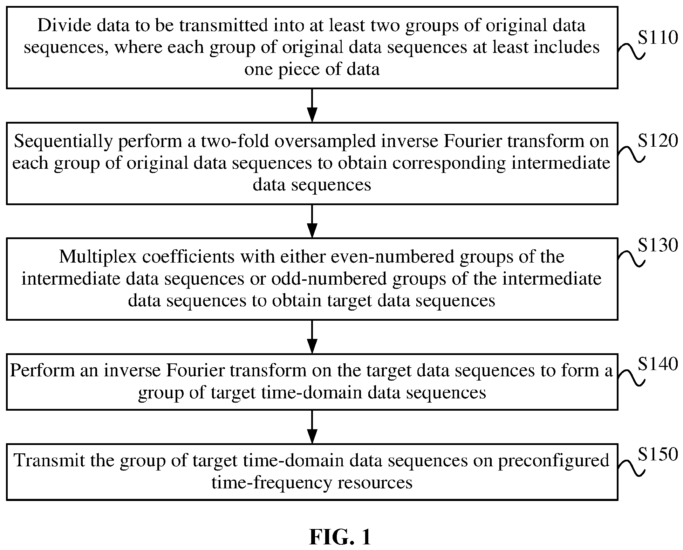

In an embodiment, FIG. 1 is a flowchart of a data transmission method according to an embodiment of the present disclosure. This embodiment is applicable to scenarios where multiple waveforms are flexibly integrated. This embodiment may be executed by a communication device. For example, the communication device may be a base station or a terminal. As shown in FIG. 1, this embodiment includes S110 to S150.

In S110, data to be transmitted is divided into at least two groups of original data sequences, where each group of original data sequences at least includes one piece of data.

In this embodiment, the original data sequence is a subset of the data to be transmitted. The data to be transmitted may be frequency-domain data to be transmitted. Accordingly, the original data sequence may also be referred to as an original frequency-domain data sequence. The data to be transmitted may also be time-domain data to be transmitted, and accordingly, the grouped original data sequences are subjected to a Fourier transform to obtain original frequency-domain data sequences. In this embodiment, each group of original data sequences at least includes one piece of data, and the number of data pieces included in different groups of original data sequences may vary.

In S120, a two-fold oversampled inverse Fourier transform is sequentially performed on each group of original data sequences to obtain intermediate data sequences.

In this embodiment, the intermediate data sequence is a sequence including time-domain data. In this embodiment, a two-fold oversampled inverse Fourier transform is performed on each group of the original data sequences to obtain corresponding intermediate data sequences. In this embodiment, the number of groups of intermediate data sequences is the same as the number of groups of original data sequences. The number of points for the inverse Fourier transform performed on an original data sequence is twice the number of data included in the group of original data sequences. In this embodiment, the use of oversampling can reduce out-of-band leakage and reduce interference in the frequency domain between data from different groups of original data sequences, thereby increasing spectral efficiency.

In S130, coefficients are multiplied with either even-numbered groups of the intermediate data sequences or odd-numbered groups of the intermediate data sequences to obtain target data sequences.

In an embodiment, coefficients may be multiplied with the even-numbered groups of intermediate data sequences among all groups of intermediate data sequences to obtain corresponding target data sequences. In an embodiment, coefficients may be multiplied with the odd-numbered groups of intermediate data sequences among all groups of intermediate data sequences to obtain corresponding target data sequences. In this embodiment, multiplying coefficients with some groups of intermediate data sequences enables the receiving end to recover the original frequency-domain data (that is, the data to be transmitted) after superposition over half a symbol.

In S140, an inverse Fourier transform is performed on the target data sequences to form a group of target time-domain data sequences.

In this embodiment, the target data sequence is frequency-domain data, and thus the target data sequence may also be referred to as a target frequency-domain data sequence. In this embodiment, the time-domain data served as the intermediate data sequence may be directly placed in the frequency domain, that is, the time-domain data is treated as frequency-domain data for the inverse Fourier transform. That is, an inverse Fourier transform is performed on the frequency-domain data serving as the target data sequence to form a corresponding group of target time-domain data sequences.

In S150, the group of target time-domain data sequences is transmitted on preconfigured time-frequency resources.

In this embodiment, preconfigured time-domain resources are used to carry the group of target time-domain data sequences, and the group of target time-domain data sequences is then transmitted to the receiving end. Thus, performing two inverse Fourier transforms on the oversampled data is equivalent to performing a single inverse Fourier transform.

In an embodiment, multiplying coefficients with either even-numbered groups of the intermediate data sequences or odd-numbered groups of the intermediate data sequences to obtain corresponding target data sequences includes one of the following: multiplying the even-numbered groups of the intermediate data sequences with a first coefficient or a second coefficient to obtain corresponding target data sequences; multiplying the odd-numbered groups of the intermediate data sequences with a first coefficient or a second coefficient to obtain corresponding target data sequences; where the first coefficient is [1, -1, 1, -1, ..., (-1)^{m-1}], and the second coefficient is [-1, 1, -1, ..., (-1)^{m}], where m is the total number of data included in each group of original data sequences.

In an embodiment, after multiplying the even-numbered groups of intermediate data sequences with the first coefficient or the second coefficient, no further coefficient multiplication is performed on the odd-numbered groups of intermediate data sequences. In an embodiment, after multiplying the odd-numbered groups of intermediate data sequences with the first coefficient or the second coefficient, no further coefficient multiplication is performed on the even-numbered groups of intermediate data sequences.

In an embodiment, the number of data included in each group of original data sequences satisfies 2ⁱ, where i is an integer.

In an embodiment, the ratio of the number of data included in every two groups of original data sequences satisfies 2ⁱ, where i is an integer.

In an embodiment, the number of data included in the at least two groups of original data sequences is the same.

In an embodiment, the two-fold oversampling includes the following operation: adding a first preset number of zero data to two ends of each group of original data sequences, where the first preset number is half of the total number of data included in each group of original data sequences. In this embodiment, adding zero data to two ends of each group of original data sequences can reduce out-of-band leakage after adding a filter and reduce interference between subbands.

In an embodiment, the number of points for the inverse Fourier transform performed on each group of original data sequences satisfies one of the following conditions: the number of points is the same as the number of data included in each group of target data sequences; the ratio of the number of points for the inverse Fourier transform between every two groups of original data sequences satisfies 2ⁱ; or the number of points for the inverse Fourier transform performed on the at least two groups of original data sequences is the same; where i is an integer. In an embodiment, an inverse Fourier transform is performed on each group of original data sequences, and the number of points for the inverse Fourier transform for each group of original data sequences is the same as the number of data included in the corresponding group of target data sequences. In an embodiment, an inverse Fourier transform is performed on each group of original data sequences, and the ratio of the number of points for the inverse Fourier transform between every two groups of original data sequences satisfies 2ⁱ. In an embodiment, an inverse Fourier transform is performed on each group of original data sequences, and the number of points for the inverse Fourier transform is the same for different groups of original data sequences.

In an embodiment, the data to be transmitted at least includes constellation point modulated data; and the data to be transmitted also includes at least one reference signal data. In an embodiment, the data to be transmitted may include constellation point modulated data. In an embodiment, the data to be transmitted may include constellation point modulated data and at least one reference signal data.

In an embodiment, the number of points for the inverse Fourier transform performed on the target data sequences is greater than the total number of groups of original data sequences.

In an embodiment, performing the inverse Fourier transform on the target data sequences to form the corresponding group of target time-domain data sequences includes performing an inverse Fourier transform on the target data sequences and other groups of data sequences to form a corresponding group of target time-domain data sequences; where the other groups of data sequences are data after two-fold frequency-domain oversampling and are not included in data sequences generated from the data to be transmitted.

In an embodiment, the group of target time-domain data sequences is formed by serially connecting initial time-domain data sequences generated by performing a one-fold oversampled inverse Fourier transform on the target data sequences. Here, the initial time-domain data sequence refers to a subsymbol obtained by performing a one-fold oversampled inverse Fourier transform on the target data sequences. In this embodiment, a one-fold oversampled inverse Fourier transform is performed on the target data in the target data sequences to obtain corresponding subsymbols, and the subsymbols are then repeatedly extended and serially connected in the time domain to obtain a corresponding group of target time-domain data sequences.

In an embodiment, the generation process of the initial time-domain data sequence includes acquiring all groups of target data sequences; extracting, from the all groups of target data sequences, a number of target data equal to the total number of groups of original data sequences; and performing a one-fold oversampled inverse Fourier transform on the number of target data equal to the total number of groups of original data sequences to obtain a corresponding initial time-domain data sequence. Assuming the total number of groups of original data sequences is N, the number of target data is N, and the total number of groups of target data sequences is N. A one-fold oversampled inverse Fourier transform is performed on every N target data, where each of the N target data comes from N groups of target data sequences. For example, assuming N groups of target data sequences are distributed across N rows (that is, one group of target data sequences per row), N target data are selected according to column indices (that is, selecting data from one column), and a one-fold oversampled inverse Fourier transform is performed on each selected set of N target data (that is, data from each column). For another example, assuming N groups of target data sequences are distributed across N columns (that is, one group of target data sequences per column), N target data are selected according to row indices (that is, selecting data from one row), and a one-fold oversampled inverse Fourier transform is performed on each selected set of N target data (that is, data from each row).

In an embodiment, the concatenation interval of the target time-domain data sequences is half the length after performing the oversampled inverse Fourier transform on the target data. In this embodiment, the target time-domain data sequences generated by the inverse Fourier transform are formed by serial concatenation, and the concatenation interval between every two adjacent initial time-domain data sequences is half the length obtained after performing an oversampled inverse Fourier transform on every N target data, that is, half the length of a subsymbol.

In an embodiment, each group of original data sequences is transmitted in a corresponding frequency-domain resource block, and each frequency-domain resource block includes a second preset number of subcarriers; and the number of data included in each group of target data sequences is twice the second preset number. In this embodiment, each group of original data sequences corresponds to one frequency-domain resource block, and each frequency-domain resource block at least includes one subcarrier. In each group of target data sequences, the number of data included in each group of target data sequences is twice the second preset number, that is, the number of data included in each group of target data sequences is twice the number of subcarriers included in the corresponding frequency-domain resource block.

In an embodiment, the zero-frequency position for the inverse Fourier transform operation on the original data sequences falls within the range of a corresponding frequency-domain resource block; and zero-frequency positions for inverse Fourier transform operations on different groups of original data sequences are different from each other. In this embodiment, the zero-frequency position refers to the zero subcarrier (that is, the 0-th subcarrier, which can also be understood as the subcarrier with index 0) in the frequency-domain resource block.

In an embodiment, the zero-frequency position for the inverse Fourier transform operation on the original data sequences is one of the subcarriers included in the each frequency-domain resource block. In this embodiment, the zero-frequency position (that is, zero subcarrier) for the inverse Fourier transform operation on each group of original data sequences is one of the subcarriers included in each frequency-domain resource block.

In an embodiment, frequency-domain resource blocks carrying the original data sequences are all or part of frequency-domain resource blocks in the channel bandwidth; the data to be transmitted is all or part of the data to be transmitted in the channel bandwidth.

In an embodiment, the data transmission method also includes filtering the group of target time-domain data sequences; where the filtering includes unidirectional filtering or polyphase filtering.

In an embodiment, the filter function used for the polyphase filtering includes one of the following: a root-raised cosine function; a raised cosine function; a rectangular function; or an isotropic orthogonal transform algorithm.

In an embodiment, the data transmission method also includes performing a windowing operation on the group of target time-domain data sequences.

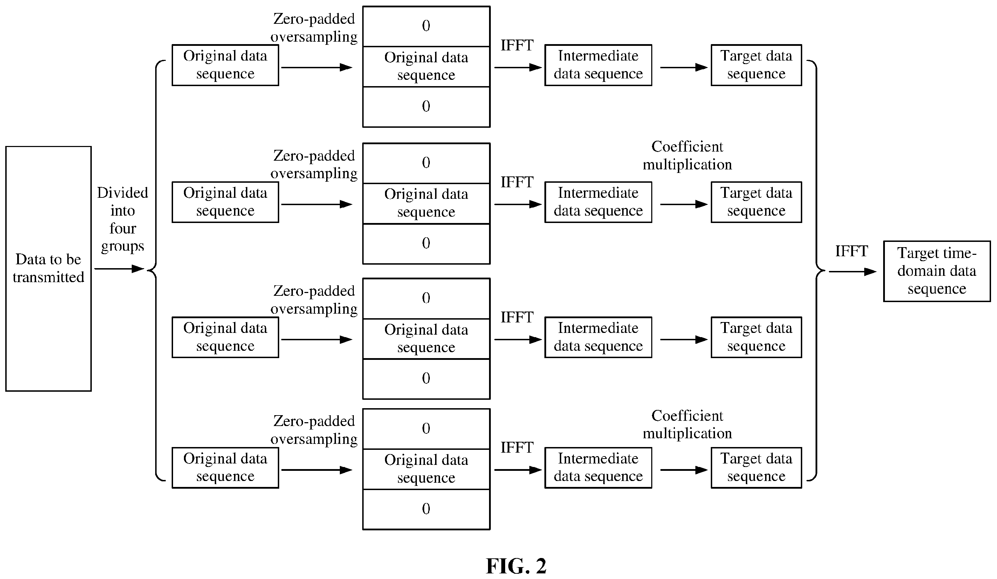

In an embodiment, FIG. 2 is a diagram of the generation of a target time-domain data sequence according to an embodiment of the present disclosure. In this embodiment, the generation process of the target time-domain data sequence is described with an example where the number of groups of original data sequences is 4, each of the four groups of original data sequences includes the same number of data, that is, 32, and the first preset number is 16.

As shown in FIG. 2, the data to be transmitted is divided into four groups of original data sequences, and each group of original data sequences include 32 pieces of data. 16 null subcarriers (that is, zero data) are added to two ends of each group of original data sequences, followed by a 64-point inverse Fourier transform to form four groups of intermediate data sequences. The data corresponding to the even-numbered groups of the four groups of intermediate data sequences are multiplied by the coefficient **[1,** -1, 1, ..., (-1)⁶³] to obtain corresponding target data sequences; then, an inverse Fourier transform is performed on the four groups of target data sequences to form a corresponding group of target time-domain data sequences; finally, the group of target time-domain data sequences is transmitted on time-frequency resources.

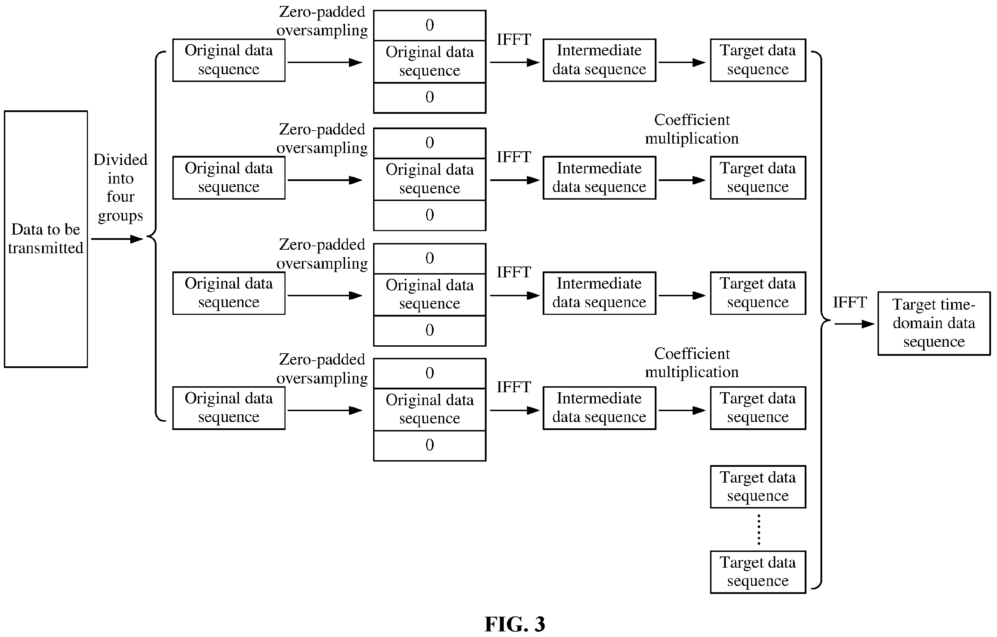

In an embodiment, FIG. 3 is a diagram of a generation of another target time-domain data sequence according to an embodiment of the present disclosure. In this embodiment, the generation process of the target time-domain data sequence is described with an example where the number of groups of original data sequences is 4, each of the four groups of original data sequences includes the same number of data that is, 32, the first preset number is 16, and the target data sequences are subjected to an inverse Fourier transform along with other data sequences.

As shown in FIG. 3, the data to be transmitted is divided into four groups of original data sequences, and each group of original data sequences includes 32 pieces of data. 16 null subcarriers (that is, zero data) are added to two ends of each group of original data sequences, followed by a 64-point inverse Fourier transform to form four groups of intermediate data sequences. The data corresponding to the even-numbered groups of the four groups of intermediate data sequences are multiplied by the coefficient **[1,** -1, 1, ..., (-1)⁶³] to obtain corresponding target data sequences; then, an inverse Fourier transform is performed on the four groups of target data sequences together with other groups of data sequences to form a corresponding group of target time-domain data sequences; finally, the group of target time-domain data sequences is transmitted on time-frequency resources. Here, the other groups of data sequences are not part of the data sequences generated from the data to be transmitted and are obtained from a two-fold oversampled Fourier transform data.

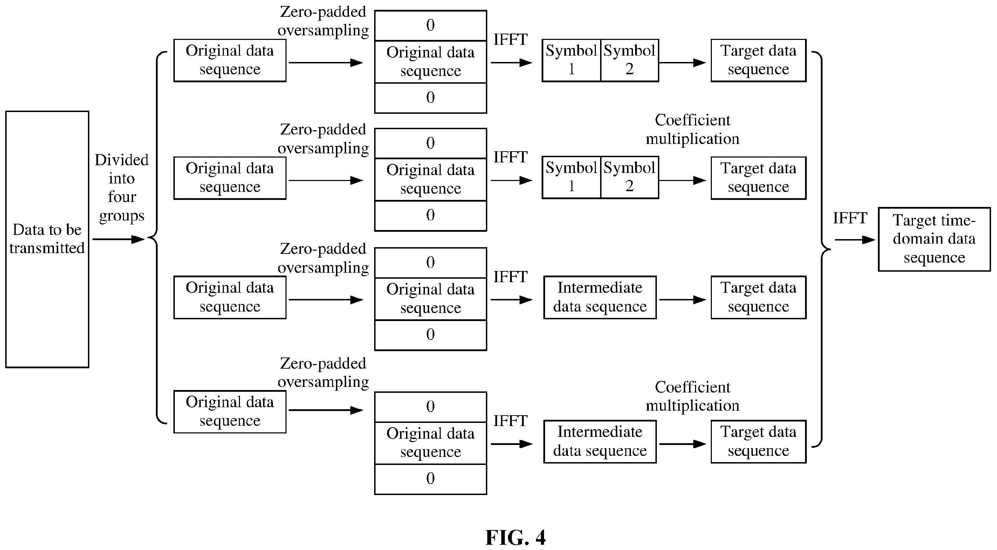

In an embodiment, FIG. 4 is a diagram of a generation of another target time-domain data sequence according to an embodiment of the present disclosure. In this embodiment, the generation process of the target time-domain data sequence is described with an example where the number of groups of original data sequences is 4, the first two groups of original data sequences each include 16 pieces of data, the last two groups of original data sequences each include 32 pieces of data, and the intermediate data sequences of the first two groups are serially connected to obtain a time-domain data sequence with the same time-domain length as the intermediate data sequences of the last two groups. For the first two groups of original data sequences, the first preset number is 8; for the last two groups of original data sequences, the first preset number is 16.

As shown in FIG. 4, the data to be transmitted is divided into four groups of original data sequences, the first two groups of original data sequences each include 16 pieces of data, and the last two groups of original data sequences each include 32 pieces of data. 8 null subcarriers are added to two ends of each of the first two groups of original data sequences, followed by a 32-point inverse Fourier transform; 16 null subcarriers are added to two ends of each of the last two groups of original data sequences, followed by a 64-point inverse Fourier transform. The intermediate data sequences of the first two groups (that is, symbol 1 and symbol 2) are serially connected to make their time-domain length equal to the time-domain length of the time-domain data sequences (that is, intermediate data sequences) of the last two groups. The data corresponding to the even-numbered groups of the four groups of intermediate data sequences are multiplied by the coefficient **[1,** -1, 1, ..., (-1)⁶³] to obtain corresponding target data sequences; then, an inverse Fourier transform is performed on the four groups of target data sequences to form a corresponding group of target time-domain data sequences; finally, the group of target time-domain data sequences is transmitted on time-frequency resources. In this embodiment, the intermediate data sequences are time-domain data.

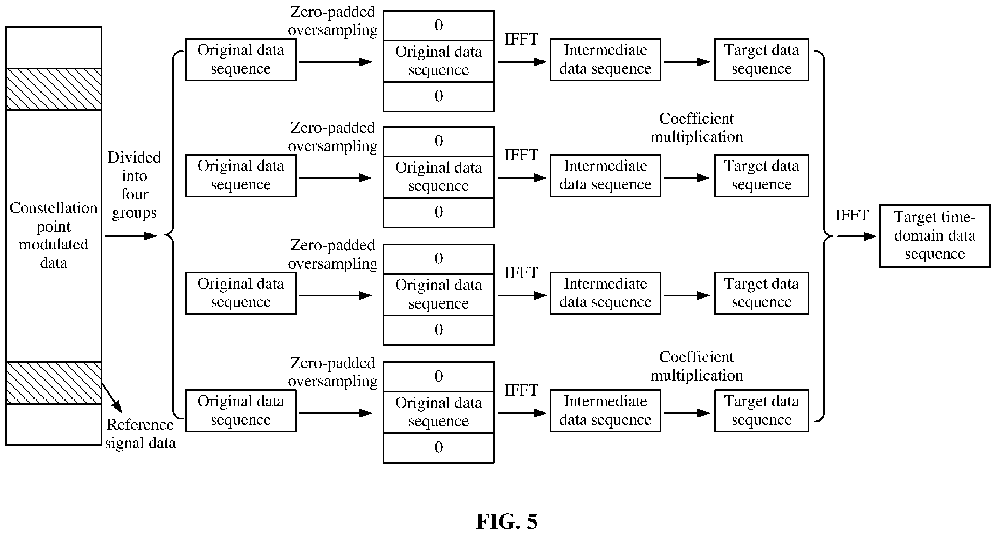

In one embodiment, FIG. 5 is a diagram of a generation of another target time-domain data sequence according to an embodiment of the present disclosure. In this embodiment, the generation process of the target time-domain data sequence is described with an example where the data to be transmitted includes constellation point modulated data and 4 reference signal data, the number of groups of original data sequences is 4, each of the four groups of original data sequences includes the same number of data, that is 32, and the first preset number is 16.

As shown in FIG. 5, the data to be transmitted includes constellation point modulated data and 4 reference signal data. The data to be transmitted is divided into four groups of original data sequences, and each group of original data sequences includes 32 pieces of data (each group of original data sequences includes one reference signal data piece). 16 null subcarriers are added to two ends of each group of original data sequences, followed by a 64-point inverse Fourier transform to form four groups of intermediate data sequences. The data corresponding to the even-numbered groups of the four groups of intermediate data sequences are multiplied by the coefficient **[1,** -1, 1, ..., (-1)⁶³] to obtain corresponding target data sequences; then, an inverse Fourier transform is performed on the four groups of target data sequences to form a corresponding group of target time-domain data sequences; finally, the group of target time-domain data sequences is transmitted on time-frequency resources.

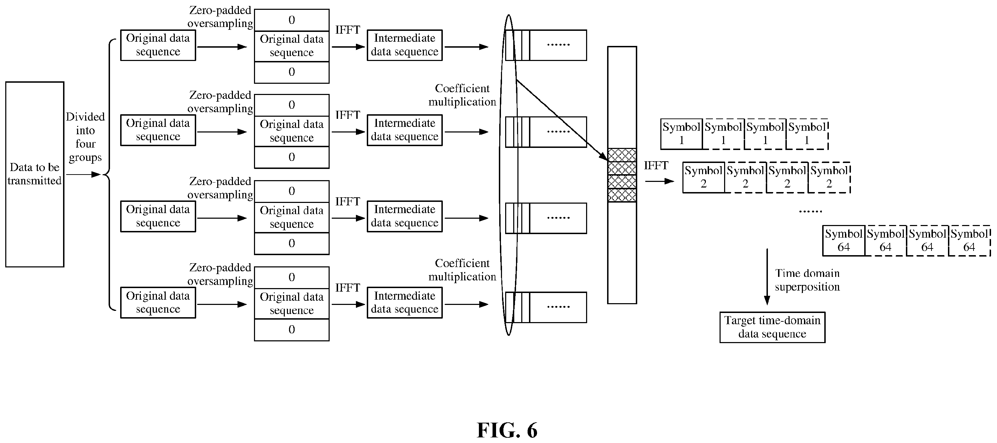

In an embodiment, FIG. 6 is a diagram of a generation of another target time-domain data sequence according to an embodiment of the present disclosure. In this embodiment, the generation process of the target time-domain data sequence is described with an example where the data to be transmitted includes constellation point modulated data and 4 reference signal data, the number of groups of original data sequences is 4, each of the four groups of original data sequences includes the same number of data, that is 32, and the first preset number is 16.

As shown in FIG. 6, the data to be transmitted is divided into four groups of original data sequences, and each group of original data sequences includes 32 pieces of data. 16 null subcarriers are added to two ends of each group of original data sequences, followed by a 64-point inverse Fourier transform to form four groups of intermediate data sequences. Then, an inverse Fourier transform is performed on the four groups of intermediate data sequences as follows: The four groups of data are placed in 4 rows, and the data in the even-numbered rows (rows 2 and 4) are multiplied by the coefficient [1, -1, 1, ..., (-1)⁶³]; then, 4 data are extracted column-wise, and a 16-point oversampled inverse Fourier transform is performed on each set of 4 extracted data to obtain a subsymbol, and the subsymbol is then repeatedly extended 4 times; finally, 64 subsymbols are serially connected in the time domain to form a group of target time-domain data sequences, with a concatenation interval of 8 points, that is, half the subsymbol length. The group of target time-domain data sequences is transmitted on time-frequency resources.

In this embodiment, the process of performing an inverse Fourier transform on the four groups of intermediate data sequences can also be understood as follows: The data corresponding to the even-numbered groups of the four groups of intermediate data sequences are multiplied by the coefficient [1, -1, 1, ..., (-1)⁶³] to obtain corresponding target data sequences; then, 4 pieces of data are selected column-wise from the four groups of target data sequences as corresponding target data; a 16-point oversampled inverse Fourier transform is performed on each set of 4 extracted data to obtain a subsymbol, and the subsymbol is then repeatedly extended 4 times; finally, 64 subsymbols are serially connected in the time domain to form a group of target time-domain data sequences, with a concatenation interval of 8 points, that is, half the subsymbol length. The group of target time-domain data sequences is transmitted on time-frequency resources.

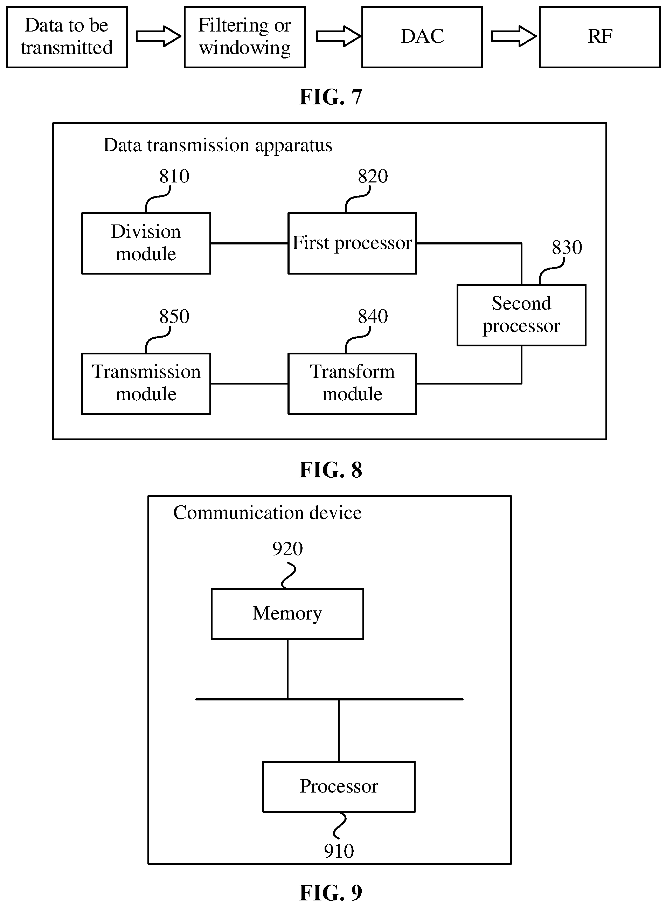

In an embodiment, FIG. 7 is a diagram of the transmission of data to be transmitted according to an embodiment of the present disclosure. As shown in FIG. 7, the data to be transmitted is sequentially subjected to windowing or filtering; then, a Digital-to-Analog Conversion (DAC) and Radio Frequency (RF) process are performed.

In this embodiment, transmitting a group of data to be transmitted also includes performing windowing or filtering on the data to be transmitted, followed by the DAC and RF processes.

In this embodiment, the windowing process includes grouping the time-domain data sequences, performing periodic extension, multiplying by a preset function point-wise, and then performing staggered superposition between the groups.

The filtering includes unidirectional filtering or polyphase filtering, where polyphase filtering involves filtering each group of the new N groups of data sequences.

In an embodiment, FIG. 8 is a block diagram illustrating the structure of a data transmission apparatus according to an embodiment of the present disclosure. This embodiment is applied to a communication device. As shown in FIG. 8, the data transmission apparatus in this embodiment includes a division module 810, a first processor 820, a second processor 830, a transform module 840, and a transmission module 850.

The division module 810 is configured to divide data to be transmitted into at least two groups of original data sequences, where each group of original data sequences at least includes one piece of data. The first processor 820 is configured to sequentially perform a two-fold oversampled inverse Fourier transform on each group of original data sequences to obtain intermediate data sequences. The second processor 830 is configured to multiply coefficients with either even-numbered groups of the intermediate data sequences or odd-numbered groups of the intermediate data sequences to obtain target data sequences. The transform module 840 is configured to perform an inverse Fourier transform on the target data sequences to form a group of target time-domain data sequences. The transmission module 850 is configured to transmit the group of target time-domain data sequences on preconfigured time-frequency resources.

In an embodiment, the second processor 830 is configured to perform one of the following: multiplying the even-numbered groups of the intermediate data sequences with a first coefficient or a second coefficient to obtain corresponding target data sequences; multiplying the odd-numbered groups of the intermediate data sequences with a first coefficient or a second coefficient to obtain corresponding target data sequences; where the first coefficient is [1, -1, 1, -1, ..., (-1)^{m-1}], and the second coefficient is [-1, 1, -1, ..., (-1)^{m}], where m is the total number of data included in each group of original data sequences.

In an embodiment, the number of data included in each group of original data sequences satisfies 2ⁱ, where i is an integer.

In an embodiment, the ratio of the number of data included in every two groups of original data sequences satisfies 2ⁱ, where i is an integer.

In an embodiment, the number of data included in the at least two groups of original data sequences is the same.

In an embodiment, the two-fold oversampling includes the following operation: adding a first preset number of zero data to two ends of each group of original data sequences, where the first preset number is half of the total number of data included in each group of original data sequences.

In an embodiment, the number of points for the inverse Fourier transform performed on each group of original data sequences satisfies one of the following conditions: the number of points is the same as the number of data included in each group of target data sequences; the ratio of the number of points for the inverse Fourier transform between every two groups of original data sequences satisfies 2ⁱ; or the number of points for the inverse Fourier transform performed on the at least two groups of original data sequences is the same; where i is an integer.

In an embodiment, the data to be transmitted at least includes constellation point modulated data; and the data to be transmitted also includes at least one reference signal data.

In an embodiment, the number of points for the inverse Fourier transform performed on the target data sequences is greater than the total number of groups of original data sequences.

In an embodiment, the transform module 840 is configured to perform an inverse Fourier transform on the target data sequences and other groups of data sequences to form a corresponding group of target time-domain data sequences; where the other groups of data sequences are data after two-fold frequency-domain oversampling and are not included in data sequences generated from the data to be transmitted.

In an embodiment, the group of target time-domain data sequences is formed by serially connecting initial time-domain data sequences generated by performing a one-fold oversampled inverse Fourier transform on the target data sequences.

In an embodiment, the generation process of the initial time-domain data sequence includes acquiring all groups of target data sequences; extracting, from the all groups of target data sequences, a number of target data equal to the total number of groups of original data sequences; and performing a one-fold oversampled inverse Fourier transform on the number of target data equal to the total number of groups of original data sequences to obtain a corresponding initial time-domain data sequence.

In an embodiment, the concatenation interval of the target time-domain data sequences is half the length after performing the oversampled inverse Fourier transform on the target data.

In an embodiment, each group of original data sequences is transmitted in a corresponding frequency-domain resource block, and each frequency-domain resource block includes a second preset number of subcarriers; the number of data included in each group of target data sequences is twice the second preset number.

In an embodiment, the zero-frequency position for the inverse Fourier transform operation on the original data sequences falls within the range of a corresponding frequency-domain resource block; and zero-frequency positions for inverse Fourier transform operations on different groups of original data sequences are different.

In an embodiment, the zero-frequency position for the inverse Fourier transform operation on the original data sequences is one of the subcarriers included in the each frequency-domain resource block.

In an embodiment, frequency-domain resource blocks carrying the original data sequences are all or part of frequency-domain resource blocks in the channel bandwidth; the data to be transmitted is all or part of the data to be transmitted in the channel bandwidth.

In an embodiment, the data transmission apparatus also includes a filtering module.

The filtering module is configured to filter the group of target time-domain data sequences; where the filtering includes unidirectional filtering or polyphase filtering.

In an embodiment, the filter function used for the polyphase filtering includes one of the following: a root-raised cosine function; a raised cosine function; a rectangular function; or an isotropic orthogonal transform algorithm.

In an embodiment, the data transmission apparatus also includes a third processor configured to perform a windowing operation on the group of target time-domain data sequences.

The data transmission apparatus provided in this embodiment is configured to perform the data transmission method of the embodiment shown in FIG. 1. The implementation principles and technical effects of the data transmission apparatus provided in this embodiment are similar and are not repeated here.

In an embodiment, FIG. 9 is a diagram illustrating the structure of a communication device according to an embodiment of the present disclosure. As shown in FIG. 9, the device provided in the present disclosure includes a processor 910 and a memory 920. One or more processors 910 may be disposed in the device. FIG. 9 shows one processor 910 as an example. One or more memories 920 may be disposed in the device. FIG. 9 shows one memory 920 as an example. The processor 910 and memory 920 of the device may be connected by a bus or in other manners. The connection by a bus is taken as an example in FIG. 9. In this embodiment, the device may be a base station or a terminal.

As a computer-readable storage medium, the memory 920 may be configured to store software programs and computer-executable programs and modules, such as program instructions/modules (for example, the division module 810, the first processor 820, the second processor 830, the transform module 840, and the transmission module 850 in the data transmission apparatus) corresponding to the device according to any embodiment of the present disclosure. The memory 920 may include a program storage region and a data storage region. The program storage region may store an operating system and an application program required by at least one function. The data storage region may store data created according to the use of the device. Moreover, the memory 920 may include a high-speed random-access memory and may also include a non-volatile memory such as at least one magnetic disk memory, a flash memory, or another non-volatile solid-state memory. In some examples, the memory 920 may include memories that are remotely disposed relative to the processor 910, and these remote memories may be connected to the device via a network. Examples of the preceding network include but are not limited to, the Internet, an intranet, a local area network, a mobile communication network, and a combination thereof.

An embodiment of the present disclosure also provides a storage medium containing computer-executable instructions. The computer-executable instructions, when executed by a computer processor, are used to perform a data transmission method. The method includes the following: Data to be transmitted is divided into at least two groups of original data sequences, where each group of original data sequences at least includes one piece of data; a two-fold oversampled inverse Fourier transform is sequentially performed on each group of original data sequences to obtain corresponding intermediate data sequences; coefficients are multiplied with either even-numbered groups of the intermediate data sequences or odd-numbered groups of the intermediate data sequences to obtain corresponding target data sequences; an inverse Fourier transform is performed on the target data sequences to form a corresponding group of target time-domain data sequences; and the group of target time-domain data sequences is transmitted on preconfigured time-frequency resources.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present disclosure may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present disclosure is not limited thereto.

Embodiments of the present disclosure may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state-setting data, or source or object codes written in any combination of one or more programming languages.

A block diagram of any logic flow among the drawings of the present disclosure may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). The computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data transmission method, comprising:
dividing data to be transmitted into at least two groups of original data sequences, wherein each group of original data sequences of the at least two groups of original data sequences at least comprises one piece of data;
sequentially performing a two-fold oversampled inverse Fourier transform on the each group of original data sequences to obtain intermediate data sequences;
multiplying coefficients with either even-numbered groups of the intermediate data sequences or odd-numbered groups of the intermediate data sequences to obtain target data sequences;
performing an inverse Fourier transform on the target data sequences to form a group of target time-domain data sequences; and
transmitting the group of target time-domain data sequences on preconfigured time-frequency resources.

2. The method according to claim 1, wherein multiplying the coefficients with either the even-numbered groups of the intermediate data sequences or the odd-numbered groups of the intermediate data sequences to obtain the target data sequences comprises one of the following:
multiplying the even-numbered groups of the intermediate data sequences with a first coefficient or a second coefficient to obtain the target data sequences; and
multiplying the odd-numbered groups of the intermediate data sequences with a first coefficient or a second coefficient to obtain the target data sequences;
wherein the first coefficient is [1, -1, 1, -1, ..., (-1)^{m-1}], the second coefficient is [-1, 1, - 1, ..., (-1)^{m}], and m is a total number of data comprised in the each group of original data sequences.

3. The method according to claim 1, wherein the number of data comprised in the each group of original data sequences satisfies 2ⁱ, and i is an integer.

4. The method according to claim 1, wherein a ratio of the number of data comprised in every two groups of original data sequences satisfies 2ⁱ, where i is an integer.

5. The method according to claim 1, wherein the number of data comprised in the at least two groups of original data sequences is the same.

6. The method according to claim 1, wherein two-fold oversampling comprises the following operation: adding a first preset number of zero data to two ends of the each group of original data sequences;
wherein the first preset number is half of a total number of data comprised in the each group of original data sequences.

7. The method according to claim 1, wherein the number of points for the inverse Fourier transform performed on the each group of original data sequences satisfies one of the following conditions: the number of points is the same as the number of data comprised in each group of target data sequences; a ratio of the number of points for the inverse Fourier transform between every two groups of original data sequences satisfies 2ⁱ; or the number of points for the inverse Fourier transform performed on the at least two groups of original data sequences is the same; wherein i is an integer.

8. The method according to any one of claims 1 to 7, wherein the data to be transmitted at least comprises constellation point modulated data; and
the data to be transmitted further comprises at least one reference signal data.

9. The method according to claim 1, wherein the number of points for the inverse Fourier transform performed on the target data sequences is greater than a total number of groups of original data sequences.

10. The method according to claim 1, wherein the performing the inverse Fourier transform on the target data sequences to form the group of target time-domain data sequences comprises:
performing an inverse Fourier transform on the target data sequences and other groups of data sequences to form the group of target time-domain data sequences;
wherein the other groups of data sequences are data after two-fold frequency-domain oversampling and are not comprised in data sequences generated from the data to be transmitted.

11. The method according to claim 1, wherein the group of target time-domain data sequences is formed by serially connecting initial time-domain data sequences generated by performing a one-fold oversampled inverse Fourier transform on the target data sequences.

12. The method according to claim 11, wherein a generation process of the initial time-domain data sequence comprises:
acquiring all groups of target data sequences;
extracting, from the all groups of target data sequences, a number of target data equal to a total number of groups of original data sequences; and
performing the one-fold oversampled inverse Fourier transform on the number of target data equal to the total number of groups of original data sequences to obtain a corresponding initial time-domain data sequence.

13. The method according to claim 11, wherein a concatenation interval of the target time-domain data sequences is half a length after performing the oversampled inverse Fourier transform on the target data.

14. The method according to claim 1, wherein each group of original data sequences is transmitted in a corresponding frequency-domain resource block, and each frequency-domain resource block comprises a second preset number of subcarriers; and
the number of data comprised in each group of target data sequences is twice the second preset number.

15. The method according to claim 14, wherein a zero-frequency position for the inverse Fourier transform operation on the original data sequences falls within a range of a corresponding frequency-domain resource block; and zero-frequency positions for inverse Fourier transform operations on different groups of original data sequences are different from each other.

16. The method according to claim 14, wherein a zero-frequency position for the inverse Fourier transform operation on the original data sequences is one of the subcarriers comprised in the each frequency-domain resource block.

17. The method according to claim 14, wherein frequency-domain resource blocks carrying the original data sequences are all or part of frequency-domain resource blocks in a channel bandwidth; and
the data to be transmitted is all or part of the data to be transmitted in the channel bandwidth.

18. The method according to claim 1, further comprising:
filtering the group of target time-domain data sequences;
wherein the filtering comprises unidirectional filtering or polyphase filtering.

19. The method according to claim 18, wherein a filter function adopted by the polyphase filtering comprises one of the following: a root-raised cosine function; a raised cosine function; a rectangular function; or an isotropic orthogonal transform algorithm.

20. The method according to claim 1, further comprising:
performing a windowing operation on the group of target time-domain data sequences.

21. A communication device, comprising: a memory and at least one processor;
wherein the memory is configured to store at least one program; and
the at least one program, when executed by the at least one processor, causes the at least one processor to implement the data transmission method according to any one of claims 1 to 20.

22. A storage medium for storing a computer program that, when executed by a processor, implements the data transmission method according to any one of claims 1 to 20.
